# EUROPÄISCHE PATENTSCHRIFT

(11) **EP 0 613 538 B1**
(45) Veröffentlichungstag und Bekanntmachung des Hinweises auf die Patenterteilung: **20.11.1996**
(21) Anmeldenummer: 93919026.0
(22) Anmeldetag: 21.09.1993
(51) Int. Cl.: F16L 21/03

(54) **ABDICHTUNG ZWISCHEN ZWEI INEINANDERSTECKBAREN TEILEN**
SEAL BETWEEN TWO INTERLOCKING COMPONENTS
JOINT D'ETANCHEITE ENTRE DEUX PIECES EMBOITABLES L'UNE DANS L'AUTRE

(30) Priorität: 21.09.1992 DE 9212666 U
(43) Veröffentlichungstag der Anmeldung: 07.09.1994
(73) Patentinhaber: Forsheda-Stefa GmbH, D-63477 Maintal (DE)
(72) Erfinder: Preisendörfer, Gerhard, D-63150 Heusenstamm (DE)
(74) Vertreter: Linde, Leif
(86) Internationale Anmeldenummer: DE9300899
(87) Internationale Veröffentlichungsnummer: WO9407074

(56) Entgegenhaltungen:
- DE-A- 3 232 823
- DE-A- 3 801 748
- DE-A- 4 108 107

## Beschreibung

Die Erfindung bezieht sich auf eine Abdichtung zwischen zwei ineinandersteckbaren Teilen, insbesondere Rohre, vornehmlich aus Beton, mit folgenden Merkmalen:
Jedes Einsteckteil weist eine Glockenmuffe mit Muffengrund und Muffenspiegel bzw. ein Spitzende auf, die unter Zwischenfügung einer Dichtung ineinanderpassen; die Dichtung ist mit Verankerungsmitteln in der Glockenmuffe befestigt; zwischen Dichtung und Muffenspiegel erstreckt sich ein Ringbereich, in welchen dichtlippenartige Teile der Dichtung ausweichen können, wenn ein Spitzende in die Glockenmuffe gesteckt wird.

Derartige Abdichtungen sind vielfach bekannt (DE 21 40 546, 22 52 089, 29 35 392, 31 00 192, 32 32 823, 33 45 569, 35 07 909). Bei diesen Abdichtungen wird entweder ein entfernbarer Formring benutzt, um den Ringbereich in der Muffe zu schaffen, in welchen die dichtlippenartigen Teile der Dichtung ausweichen können, oder es wird ein Kragen und ein stegförmig geformtes Stützelement zur Bildung eines Freiraums geschaffen (DE 33 45 569), in welchen die dichtlippenartigen Teile ausweichen können.

Zur Abdichtung zwischen Betonrohren werden zwei hauptsächliche Bauarten der Dichtung verwendet, nämlich die Rolldichtung und die Gleitdichtung. Bei der Gleitdichtung unterscheidet man zwischen Kompressionsdichtungen und Lippendichtungen. Die Abdichtfunktion bei Kompressionsdichtungen beruht auf deren Zusammenpreßbarkeit, während bei Lippendichtungen die schmalflächige Anlage an das abzudichtende Teil genügt, wenn die Lippe leicht gebogen ist und überdruck im Rohr die Lippe andrückt. Abdichtungen mit Lippendichtungen ermöglichen den leichten Zusammenbau der abzudichtenden Teile, da nur geringe axiale Einschubkräfte beim Ineinanderstecken der Teile notwendig sind. Andererseits lassen sich keine größeren radialen Kräfte zwischen den abzudichtenden Teilen über die Lippendichtung übertragen. Hier hat die Kompressionsdichtung Vorteile. Außerdem sind Kompressionsdichtungen gegen Beschädigung weniger empfindlich als Lippendichtungen. Um die Vorteile der beiden Arten der Gleitdichtungen zu nutzen, hat man die sogenannte "Kompressionslippe" geschaffen, die eine Kompressionsdichtung mit überhängenden Teilen darstellt. Wenn die ineinandersteckbaren Teile eine zu enge Passung haben, wird die Kompressionslippe beim Zusammenstecken der Teile zu sehr abgebogen, und es besteht die Gefahr der Rißbildung und des Verdrückens der Dichtung. Die gleiche Gefahr tritt auf, wenn allzu große radiale Lasten über die Dichtung übertragen werden, was vor allem bei vergrabenen Rohren als den ineinanderzusteckenden Teilen vorkommt.

Hier versucht die Erfindung, Abhilfe zu schaffen. Der Erfindung liegt demnach die Aufgabe zugrunde, eine Abdichtung der eingangs angegebenen Art vorzuschlagen, bei der die günstigen Eigenschaften der Kompressionslippe genutzt werden können, wobei die Gefahr der Überstrapazierung der Kompressionslippe wesentlich herabgesetzt wird.

Die gestellte Aufgabe wird durch die Merkmale von Anspruch 1 gelöst.

Die Kompressionslippendichtung läßt sich im Normalbetrieb der Dichtung zusammenpressen und verbiegen, wie es ohne Zellgummiring der Fall wäre. Beim überschreiten eines gewissen Ausmaßes der Zusammenpressung und Verbiegung wird jedoch der Zellgummiring wirksam und bietet eine Abstützung, welche die Dichtung im Sinne einer nunmehr breiteren Preßdichtung komplettiert.

Mach einer vorteilhaften Ausgestaltung der Erfindung ist der Lippenbildungsspalt V-förmig geformt, um einerseits das Abbiegen der Kompressionslippe am Boden des Spaltes zu begünstigen ("Scharnierbildung") und andererseits das Umgreifen des Zellgummiringes bei Belastung zu begünstigen, so daß der Zellgummiring als Auflage für die überhängende Lippe dienen kann.

Wenn sich der Zellgummiring bei Belastung umlegt, kann für ihn ein Ausweichraum geschaffen werden. Zu diesem Zweck weist die Glockenmuffe im Ringbereich zwischen Dichtung und Muffenspiegel angeordnete Stufen auf, um unterschiedlich tiefe Kammern zu schaffen, deren Tiefe zum Glockenspiegel hin abnehmen.

Ausführungsbeispiele der Erfindung werden anhand der Zeichnung beschrieben. Dabei zeigt:
- Fig. 1: einen Schnitt durch eine Dichtung nach einer ersten Ausführungsnform,
- Fig. 2: eine zweite Ausführungsform der Dichtung, in eine Glockenmuffe eingebunden,
- Fig. 3: eine dritte Ausführungsform,
- Fig. 4: eine vierte Ausführungsform und
- Fig. 5: die vierte Ausführungsform im zusammengebauten Zustand.

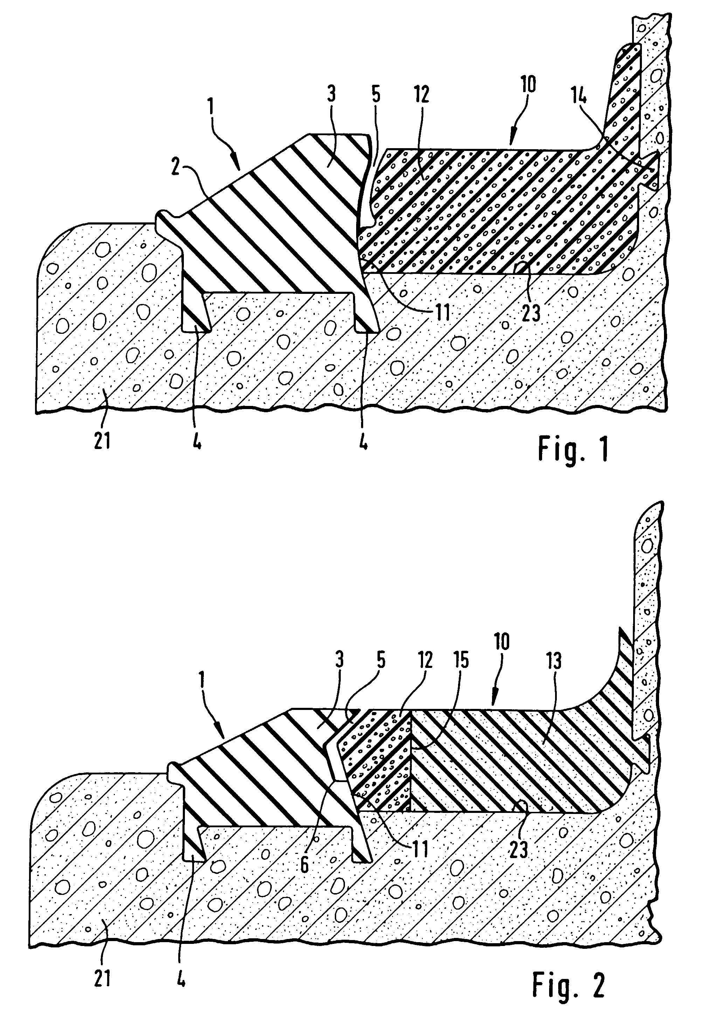

Fig. 1 zeigt eine Gleitdichtung 1 aus Elastomer oder Gummi mit einer Einführungsschrägfläche 2 und einer sogenannten Kompressionslippe 3. Die Dichtung 1 ist mittels Füßen 4, die schwalbenschwanzförmigen Querschnitt aufweisen, in einer Glockenmuffe 21 verankert. Die Kompressionslippe 3 ist über einen Spalt 5 von einem Ausfüllungsring 10 aus Zellgummi getrennt, der mit einer Klebefläche 11 an der Dichtung 1 befestigt ist. Der Ausfüllungsring 10 wird beim Gießen der Glockenmuffe zusammen mit der Dichtung 1 mit eingebunden. Zu diesem Zweck können an dem Ausfüllungsring 10 Füße 14 oder entsprechende Verankerungsausbildungen angebracht sein. Während die Gleitdichtung 1 eine Shore-Härte von 50 aufweisen kann, hat der Ausfüllungsring 10 eine Shore-Härte von 20 bis 30.

Die dargestellte Dichtung wird beim Einstecken eines Spitzendes zusammengepreßt, wobei die radiale Höhe der Kompressionslippe 3 abnimmt und gleichzeitig die Kompressionslippe 3 in der Zeichnung nach rechts abgebogen wird. Der Spalt 5 verschwindet dabei im wesentlichen, und die Kompressionslippe 3 trifft auf den Ausfüllungsring 10, welcher im Ringbereich 12 aus Zellgummi besteht und zusammengepreßt wird. Wenn die Hohlräume des Zellgummis in diesem Ringbereich 12 gewissermaßen aufgebraucht sind, nimmt die Härte des Zellgummiringes stark zu, so daß eine Auflagefläche für die Kompressionslippe 3 gebildet und diese nicht weiter abgebogen wird. Auf diese Weise verwandelt sich die Dichtung bei starken radialen Lasten in eine Kompressionsdichtung ohne merkliche Lippenfunktion, während bei nachlassender Radialkraft wiederum die Lippenfunktion der Dichtung zum Tragen kommt.

Fig. 2 zeigt eine Abwandlung der Dichtung 1 und des Zellgummiringes 10. Dieser ist aus zwei Ringen 12 und 13 aufgebaut, die längs der radialen Fläche 15 aneinander befestigt sind, wobei der Ring 13 auch aus billigerem Schaumstoff bestehen kann. Der Spalt 5 hat im Querschnitt eine V-Form und weist am Boden eine Kante 6 auf, die gewissermaßen ein Scharnier für die Kompressionslippe 3 bildet, so daß sich diese überhängend auf dem Zellgummiring 12 abstützen kann.

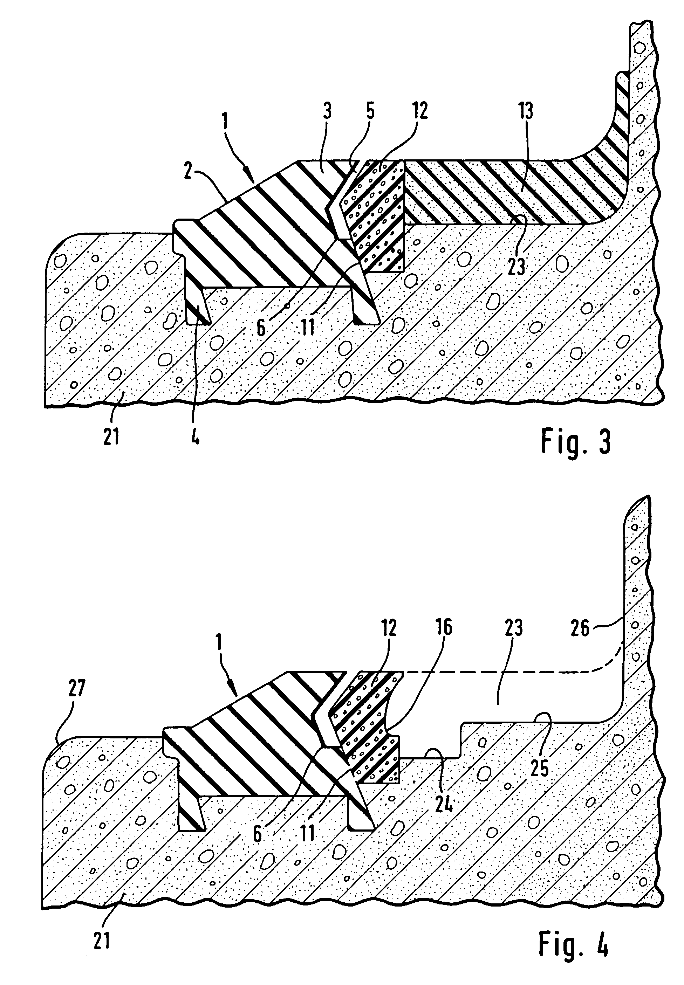

Fig. 3 zeigt ein weiteres Ausführungsbeispiel, bei dem der Ring 13 aus der Glockenmuffe als sogenannter entfernbarer Formring ausgebildet ist. Der Ring 12 ist als Kammerring ausgebildet, d.h. seine radiale Erstreckung kommt der radialen Abmessung des Dichtungsringes 1 (nahezu) gleich. Dadurch wird mehr zusammendrückbare Masse beim Kammerring 12 gebildet.

Fig. 4 zeigt eine weitere Abwandlung, und zwar hauptsächlich an der Glockenmuffeninnenseite im Ringbereich 23. Dieser Ringbereich 23 ist stufenförmig ausgebildet, so daß eine Ringkammer 24 gebildet wird, welche Teile des Zellgummiringes 12 aufnehmen kann, wenn sich dieser bei Belastung umlegt. Zu diesem Zweck weist der Ring 12 eine Knickstelle 16 auf, welche dieses Umlegen begünstigt.

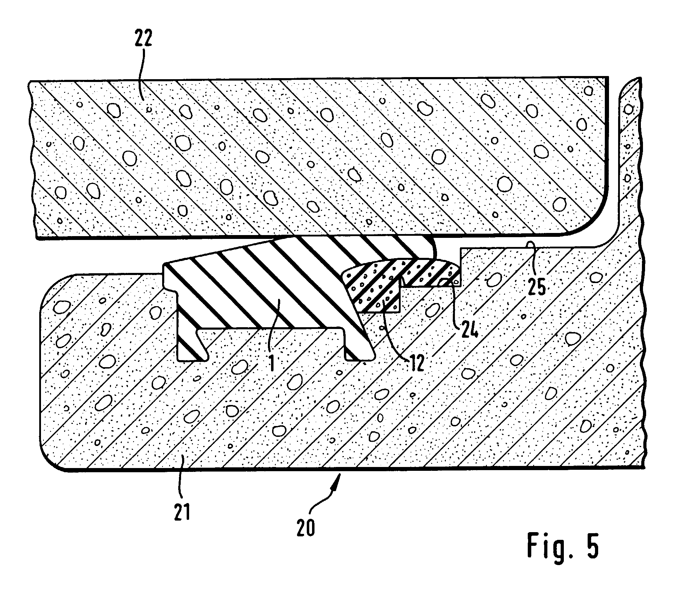

Der Muffengrund 25 benachbart der Spiegelfläche 26 hat im übrigen einen geringeren radialen Durchmesser als die Muffeninnenseite im Bereich der Einführungsabrundung 27. Bei starken radialen Lasten kommt deshalb das Spitzende 22 (Fig. 5) zur Anlage auf der Fläche 25, wodurch eine weitere radiale Zusammenpressung der Dichtung und damit deren Zerquetschung vermieden wird. Das Volumen der Ringkammer 24 wird genau auf diesen Belastungsfall zugeschnitten, d.h. der abgebogene Ring 12 und die überhängenden Teile der Kompressionslippe 3 können gerade aufgenommen werden.

Fig. 5 skizziert die Muffendichtung im Anwendungsfall. Wenn die radialen Lasten zunehmen, wird der Zellgummiring 12 weiter zusammengepreßt, und die Kompressionslippe 3 weicht ebenfalls in die Kammer 24 aus, während diese Teile in ihre dargestellte Abdichtstellung zurückgehen, wenn die radiale Last sich wieder verringert.

## Patentansprüche

1. Abdichtung zwischen zwei ineinandersteckbaren Teilen, insbesondere Rohren, vornehmlich aus Beton, mit folgenden Merkmalen:
an den ineinandersteckbaren Teilen sind Glockenmuffen (21) bzw. Spitzenden (22) ausgebildet, die unter Zwischenfügung einer Gleitdichtung (1) ineinanderpassen;
die Gleitdichtung (1) ist mit Verankerungsmitteln (4) in der Glockenmuffe (21) befestigt;
zwischen Gleitdichtung (1) und Muffenspiegel (26) erstreckt sich ein Ringbereich (23), in welchen dichtlippenartige Teile der Gleitdichtung (1) ausweichen können, wenn ein Spitzende (22) in eine Glockenmuffe (21) gesteckt wird;
die Gleitdichtung (1) ist als Kompressionslippendichtung (3) ausgebildet und über einen Lippenbildungsspalt (5) von einem Zellgummiring (12) getrennt, der den Ringbereich (23) wenigstens teilweise einnimmt.

2. Abdichtung nach Anspruch 1,
dadurch gekennzeichnet,
daß der Lippenbildungsspalt (5) eine Abknickstelle (6) zur Bildung eines Scharniers für die Kompressionslippendichtung (3) aufweist.

3. Abdichtung nach Anspruch 1 oder 2,
dadurch gekennzeichnet,
daß der Lippenbildungsspalt (5) einen V-förmigen Querschnitt aufweist.

4. Abdichtung nach einem der Ansprüche 1 bis 3,
dadurch gekennzeichnet,
daß die Glockenmuffe (21) im Ringbereich (23) angeordnete Stufen aufweist, um unterschiedlich tiefe Kammern (24, 25) zu schaffen, deren Tiefen zum Glockenspiegel (26) hin abnehmen.

5. Abdichtung nach Anspruch 4,
dadurch gekennzeichnet,
daß die Kammern (24, 25) nach Entfernung eines Formringes (13) frei sind.

6. Abdichtung nach einem der Ansprüche 1 bis 3,
dadurch gekennzeichnet,
daß der Zellgummiring (12) Teil eines zusammengesetzten Ausfüllungsrings (10) ist, der im Ringbereich (23) angeordnet ist.

## Claims

1. A sealing device between two interlocking components, especially pipes, preferably of concrete, including the following features:
at the interlocking components there are formed sockets (21) and spigot ends (22), respectively, which fit into each other under intermediate connection of a sliding seal (1);
the sliding seal (1) is by means of anchorage means (4) fixed in the socket (21);
between the sliding seal (1) and the bottom (26) of the socket there extends an annular region (23), into which elements of the sliding seal (1) formed as sealing lips can turn off when a spigot end (22) is introduced into a socket (21);
the sliding seal (1) is designed as a compression lip seal (3) and is by means of a lip-forming space (5) separated from a cellular rubber ring (12) which at least partially occupies the annular space (23).

2. A sealing device as claimed in claim 1, **characterized** in that the lip-forming space (5) has a folding section (6) for forming a pivot for the compression lip seal (3).

3. A sealing device as claimed in claim 1 or 2, **characterized** in that the lip-forming space (5) has a V-shaped cross section.

4. A sealing device as claimed in any of claims 1 to 3, **characterized** in that the socket (21) is in the annular region (23) provided with steps for forming chambers (24, 25) of different depths, the depths thereof being reduced in direction of the bottom (26) of the socket.

5. A sealing device as claimed in claim 4, **characterized** in that the chambers (24, 25) are open after the removal of a mould ring (13).

6. A sealing device as claimed in any of claims 1 to 3, **characterized** in that the cellular rubber ring (12) is a part of a composite filling ring (10) which is positioned in the annular region (23).

## Revendications

1. Dispositif d'étanchéité entre deux éléments pouvant être raccordés par emboîtement, en particulier des tuyaux, notamment en béton, présentant les caractéristiques suivantes :
les éléments pouvant être raccordés par emboîtement comportent l'un un about femelle (21) en forme de tulipe et l'autre un about mâle (22), ces abouts pouvant être emboîtés avec un joint glissant (1) intercalé;
le joint glissant (1) est fixé dans l'about femelle (21) à l'aide de moyens d'ancrage (4);
entre le joint glissant (1) et la surface de fond (26) de l'about femelle se trouve une zone annulaire 23) dans laquelle des parties en forme de lèvre d'étanchéité du joint glissant (1) peuvent s'écarter lorsque un about mâle (22) est emboîté dans l'about femelle (21);
le joint glissant (1) est réalisé sous forme de joint à lèvre à compression (3) et est séparé par une fente de formation de lèvre (5) d'un anneau (12) en caoutchouc cellulaire qui occupe au moins partiellement la zone annulaire (23).

2. Dispositif d'étanchéité suivant la revendication 1, caractérisé par le fait que la fente de formation de lèvre (5) présente un emplacement de flexion (6) pour la formation d'une charnière pour le joint à lèvre à compression (3).

3. Dispositif d'étanchéité suivant la revendication 1 ou 2, caractérisé par le fait que la fente de formation de lèvre (5) présente une section en V.

4. Dispositif d'étanchéité suivant l'une des revendications 1 à 3, caractérisé par le fait que l'about femelle (21) est étagé dans la zone annulaire (24), pour créer des chambres (24, 25) de profondeurs différentes, dont la profondeur diminue en direction de la surface de fond (26) de l'about femelle.

5. Dispositif d'étanchéité suivant la revendication 4, caractérisé par le fait que les chambres (24, 25) sont libres après enlèvement d'un anneau de moulage (13).

6. Dispositif d'étanchéité suivant l'une des revendications 1 à 3, caractérisé par le fait que l'anneau (12) en caoutchouc cellulaire fait partie d'un anneau de remplissage composite (10) qui est disposé dans la zone annulaire (23).
